# EUROPEAN PATENT SPECIFICATION

(11) **EP 2 503 677 B1**
(45) Date of publication and mention of the grant of the patent: **15.10.2014**
(21) Application number: 12161331.9
(22) Date of filing: 26.03.2012
(51) Int. Cl.: H02K 35/02

(54) **Reciprocal vibration type power generator equipped with inner columnar and outer annular magnetic motion block**
Energieerzeuger vom Reziprokevibrationstyp mit inneren säulenförmigen und ausseren ringförmigen magnetischen Fahrsatz
Générateur d'énergie du type à vibrations réciproques avec moyen magnétique de mouvement cylindrique intérieur et annulaire extérieur

(30) Priority: 25.03.2011 US 201113071616
(43) Date of publication of application: 26.09.2012
(73) Proprietor: Yang, Tai-Her, Si-Hu Town Dzan-Hwa (TW)
(72) Inventor: Yang, Tai-Her, Si-Hu Town Dzan-Hwa (TW)
(74) Representative: Wright, Howard Hugh Burnby

(56) References cited:
- EP-A1- 1 737 120
- CN-A- 101 510 717
- CN-U- 201 656 734
- CN-U- 201 690 339
- JP-A- S 614 456
- JP-A- S58 165 657
- US-A1- 2004 100 344
- US-B1- 7 675 202
- KRAUSE W ET AL: "ANTRIEBSSYSTEME FUER AUTOMATEN DER KLEINTEILMONTAGE", TECHNISCHE RUNDSCHAU, HALLWAG AG, CH, vol. 89, no. 14, 4 April 1997 (1997-04-04) , pages 26-30, XP000659713, ISSN: 1023-0823

## Description

### BACKGROUND OF THE INVENTION

### (a) Field of the Invention

The present invention is a novel design for the axial vibration type power generator, wherein the outer end of the location where the columnar magnet passing the annular power generation coil set being installed with an outer magnetic conductive member for reducing the magnetic resistance generated while the magnetic poles at two ends of the columnar magnet passing the annular power generation coil set, the columnar magnet and the outer magnetic conductive member are jointly combined to a motion block assembly (106) for generating synchronous axial displacement so as to pass the annular power generation coil set, and enable the annular power generation coil set to generate electric power based on the Lenz Law.

### (b) Description of the Prior Art

The conventional axial vibration type power generator utilizes a round columnar magnet being axially coupled with an annular power generation coil set for performing axial vibrating displacement, so that the power generation coil set is enabled to generate electric power based on the Len's Law. However, the coupling magnetic lines of the columnar magnet and the annular power generation coil set are transmitted through air, thereby the magnetic resistance is relatively larger, and the voltage of the generated electric power is therefore lowered.

CN101510717 A describes a motor device, which comprises a solenoid coil, a magnet, a sensor, a control circuit and the like. The motor device can apply work with the electro-magnetic force between the solenoid coil and the magnet, which can not only fully take use of the attraction of the magnetic field to apply work but also exploit the repelling force to apply work, thus significantly improving the torque and efficiency of the motor and lead the motor to have simple structure and low cost.

### SUMMARY OF THE INVENTION

The present invention is installed with a columnar magnet in a round columnar shape and having different magnetic poles in the axial direction, and an outer magnetic conductive member enclosing at the exterior thereof, the above two are combined to a motion block assembly (106) and coaxially adjacent disposed for structuring a magnetic path for performing the synchronous axial displacement, and the outer diameter of the columnar magnet is smaller than the inner diameter of the outer magnetic conductive member and formed with an annular gap allowing an annular power generation coil set to pass therebetween, thereby when the above two axially perform relative reciprocal axial displacing vibrations, the annular power generation coil set is enabled to generate electric power based on the Lenz Law.

According to the present invention, reciprocal vibration and power generators according to claims 1 to 3 are provided.

### BRIEF DESCRIPTION OF THE DRAWINGS

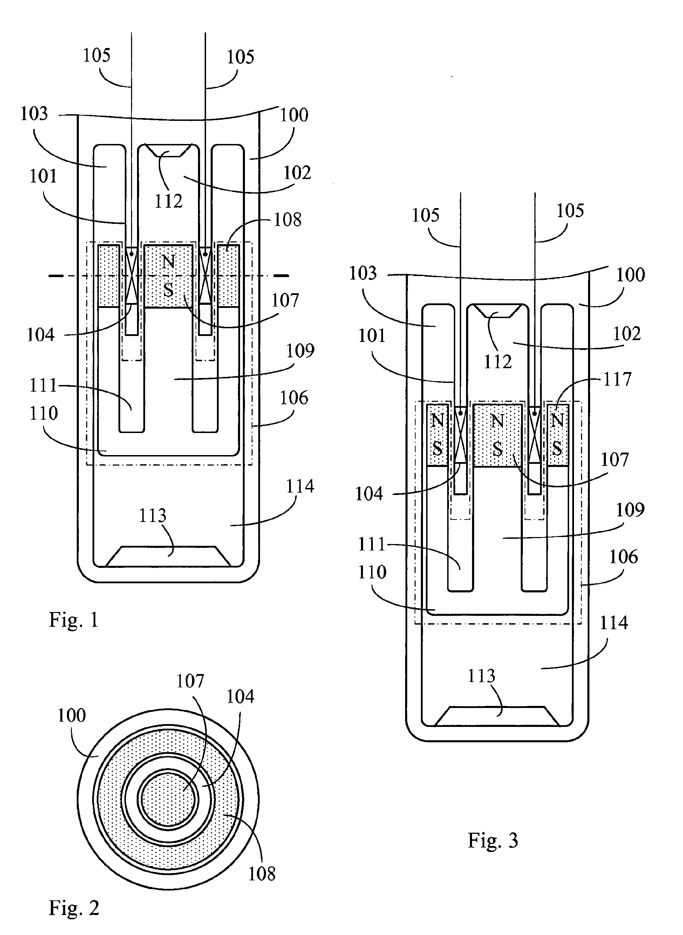

FIG. 1 is a schematic structural view showing the interior of the annular power generation coil set (104) being coupled with the columnar magnet (107), and the exterior thereof being coupled with the outer magnetic conductive member (108), according to one embodiment of the present invention.
FIG. 2 is a cross view of FIG. 1.
FIG. 3 is a schematic structural view showing the interior of the annular power generation coil set (104) being coupled with the columnar magnet (107), and the exterior thereof being coupled with the outer magnet (117) relatively installed in the same polarity with the columnar magnet (107), according to one embodiment of the present invention.

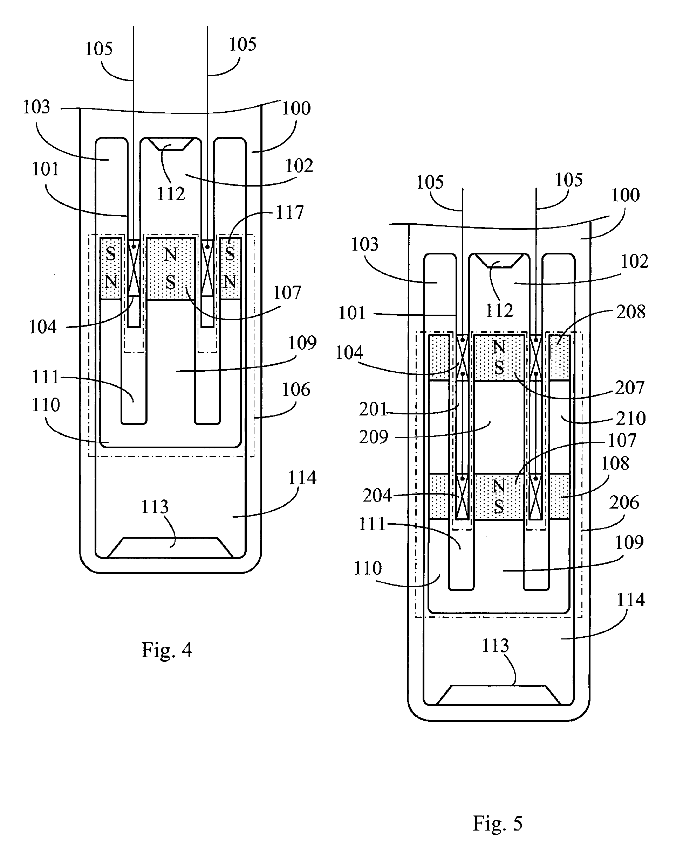

FIG. 4 is a schematic structural view showing the interior of the annular power generation coil set (104) being coupled with the columnar magnet (107), and the exterior thereof being coupled with the outer magnet (117) relatively installed in different polarities to the columnar magnet (107), according to one embodiment of the present invention.
FIG. 5 is a schematic structural view showing the present invention being composed of the annular power generation coil sets (104), (204) arranged in the multiple segment format, and the interior of the annular power generation coil sets (104), (204) being coupled with the columnar magnets (107), (207), and the exterior thereof being coupled with the outer magnetic conductive members (108), (208), according to one embodiment of the preset invention.

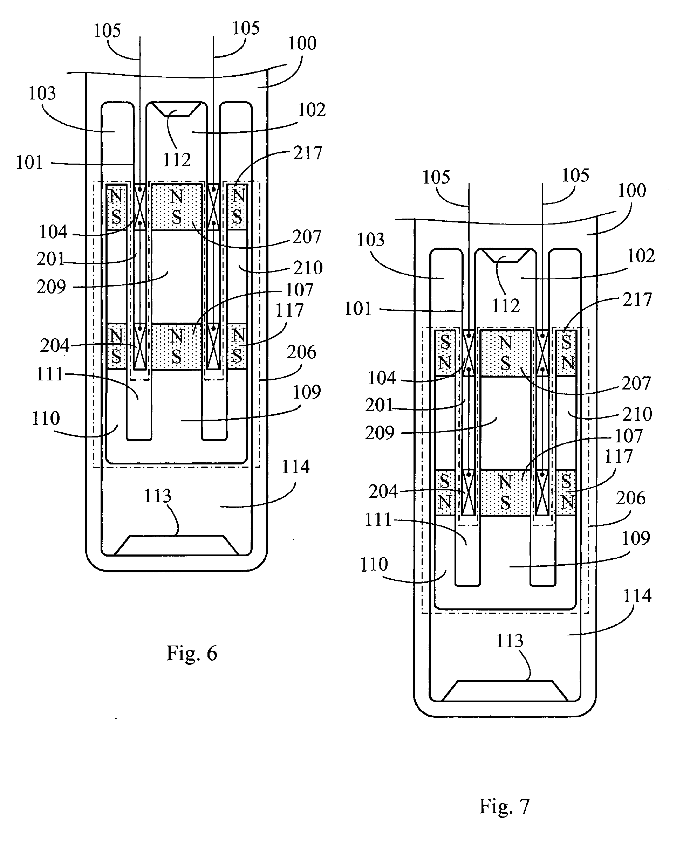

FIG. 6 is a schematic structural view showing the present invention being composed of the annular power generation coil sets (104), (204) arranged in the multiple segment format, the interior of the annular power generation coil sets (104), (204) being coupled with the columnar magnets (107), (207), and the exterior thereof being coupled with the outer magnets (117), (217) arranged in the multiple segment format and relatively installed in the same polarity with the columnar magnet (107), according to one embodiment of the preset invention.
FIG. 7 is a schematic structural view showing the present invention being composed of the annular power generation coil sets (104), (204) arranged in the multiple segment format, and the interior of the annular power generation coil sets (104), (204) being coupled with the columnar magnets (107), (207), and the exterior thereof being coupled with the outer magnets (117), (217) arranged in the multiple segment format and relatively installed in different polarities to the columnar magnet (107), according to one embodiment of the preset invention.

### DESCRIPTION OF MAIN COMPONENT SYMBOLS

(100) : Housing
(101) : Tubular annular coil set seat
(102) : Round space
(103) : Annular space
(104) , (204) : Annular power generation coil set
(105) : Output wire
(106) , (206) : Motion block assembly
(107) , (207) : Columnar magnet
(108) , (208) : Outer magnetic conductive member
(109) , (209) : Center column of motion block
(110) : Cup-shaped structure of motion block
(111) : Inner annular space of motion block
(112) : First buffer member
(113) : Second buffer member
(114) : Cylindrical space inside the housing
(117) , (217) : Outer magnet
(201) : Tubular annular coil set partition seat
(210) : Cup-shaped structure partition ring

### DETAILED DESCRIPTION OF THE PREFERRED EMBODIMENTS

The conventional axial vibration type power generator utilizes a round columnar magnet being axially coupled with an annular power generation coil set for performing axial vibrating displacement, so that the power generation coil set is enabled to generate electric power based on the Len's Law. However, the coupling magnetic lines of the columnar magnet and the annular power generation coil set are transmitted through air, thereby the magnetic resistance is relatively larger, and the voltage of the generated electric power is therefore lowered.

The present invention is installed with a columnar magnet in a round columnar shape and having different magnetic poles in the axial direction, and an outer magnetic conductive member enclosing at the exterior thereof, the above two are combined to a motion block assembly (106) and coaxially adjacent disposed for structuring a magnetic path for performing the synchronous axial displacement, and the outer diameter of the columnar magnet is smaller than the inner diameter of the outer magnetic conductive member and formed with an annular gap allowing an annular power generation coil set to pass therebetween, thereby when the above two axially perform relative reciprocal axial displacing vibrations, the annular power generation coil set is enabled to generate electric power based on the Lenz Law.

The present invention is a novel design for the axial vibration type power generator, wherein the outer end of the location where the columnar magnet passing the annular power generation coil set being installed with an outer magnetic conductive member for reducing the magnetic resistance generated while the magnetic poles at two ends of the columnar magnet passing the annular power generation coil set, the columnar magnet and the outer magnetic conductive member are jointly combined to a motion block assembly (106) for generating synchronous axial displacement so as to pass the annular power generation coil set, and enable the annular power generation coil set to generate electric power based on the Lenz Law.

FIG. 1 is a schematic structural view showing the interior of the annular power generation coil set (104) being coupled with the columnar magnet (107), and the exterior thereof being coupled with the outer magnetic conductive member (108), according to one embodiment of the present invention;

FIG. 2 is a cross view of FIG. 1;

As shown in FIG. 1 and FIG. 2, it mainly consists of:
-- Housing (100): which is constituted by a material having poor magnetic conduction and poor electric conduction, formed in a hollow cylindrical shape and one inner end inwardly extended with a tubular annular coil set seat (101) with its distal end being extended for connecting to the annular power generation coil set (104), and an annular space (103) is formed between the tubular annular coil set seat (101) and the inner hole of the housing (100), and the center of the tubular annular coil set seat (101) is formed with a round space (102), and the annular power generation coil set (104) is installed with an output wire (105) for outputting the electric power generated by the annular power generation coil set (104);
-- Motion block assembly (106): which is constituted by a material having poor magnetic conduction and poor electric conduction, and is provided with a cup-shaped structure of motion block (110) for combining with the outer magnetic conductive member (108), and the center of the cup-shaped structure of motion block (110) is provided with a center column of motion block (109) for combining with the columnar magnet (107), and the periphery of the central column of motion block (109) and the cup-shaped structure of motion block (110) form an inner annular space of motion block (111) for being sleeved and combined with the annular power generation coil set (104) and the tubular annular coil set seat (101) and allowing the mentioned two to perform relative axial displacement, and the round space (102) of the tubular annular coil set seat (101) is provided for being sleeved and combined with the columnar magnet (107) and the center column of motion block (109) and allowing the mentioned two to perform relative axial displacement;
-- A first buffer member (112) is installed between the round space (102) of the tubular annular coil set seat (101) and the inner wall of the housing (100) for serving as a buffer while the center column (109) and the columnar magnet (107) of the motion block assembly (106) and the outer magnetic conductive member (108) perform axial displacement;
-- The mentioned columnar magnet (107) is provided for when performing the axial reciprocal vibration with the outer magnetic conductive member (108) to pass through the annular power generation coil set (104), enabling the annular power generation coil set (104) to generate a power generation effect;
-- The cylindrical space (114) inside the housing (100) is provided for being sleeved with the outer periphery of the motion block assembly (106) and allowing the relative axial displacement, and a second buffer member (113) is installed between the motion block assembly (106) and the cylindrical space (114) inside the housing (100) for serving as a buffer when the motion block assembly (106) performs the axial displacement.

FIG. 3 is a schematic structural view showing the interior of the annular power generation coil set (104) being coupled with the columnar magnet (107), and the exterior thereof being coupled with the outer magnet (117) relatively installed in the same polarity with the columnar magnet (107), according to one embodiment of the present invention;

The cross view of FIG. 3 is the same as what is shown in FIG. 2

As shown in FIG. 3, it mainly consists of:
-- Housing (100): which is constituted by a material having poor magnetic conduction and poor electric conduction, formed in a hollow cylindrical shape and one inner end inwardly extended with a tubular annular coil set seat (101) with its distal end being extended for connecting to the annular power generation coil set (104), and an annular space (103) is formed between the tubular annular coil set seat (101) and the inner hole of the housing (100), and the center of the tubular annular coil set seat (101) is formed with a round space (102), and the annular power generation coil set (104) is installed with an output wire (105) for outputting the electric power generated by the annular power generation coil set (104);
-- Motion block assembly (106): which is constituted by a material having poor magnetic conduction and poor electric conduction, and is provided with a cup-shaped structure of motion block (110) for combining with the outer magnet (117), and the center of the cup-shaped structure of motion block (110) is provided with a center column of motion block (109) for combining with the columnar magnet (107), and the periphery of the central column of motion block (109) and the cup-shaped structure of motion block (110) form an inner annular space of motion block (111) for accommodating the annular power generation coil set (104) and the tubular annular coil set seat (101) and allowing the mentioned two to perform relative axial displacement, and the round space (102) of the tubular annular coil set seat (101) is provided for accommodating the columnar magnet (107) and the center column of motion block (109) and allowing the mentioned two to perform relative axial displacement;
-- A first buffer member (112) is installed between the round space (102) of the tubular annular coil set seat (101) and the inner wall of the housing (100) for serving as a buffer while the center column (109) and the columnar magnet (107) of the motion block and the outer magnetic conductive member (108) perform axial displacement;
-- The mentioned columnar magnet (107) is provided for when performing the axial reciprocal vibration with the outer magnet (117) to pass through the annular power generation coil set (104), enabling the annular power generation coil set (104) to generate a power generation effect;
-- The cylindrical space (114) inside the housing (100) is provided for being sleeved with the outer periphery of the motion block assembly (106) and capable of performing the relative axial displacement, and a second buffer member (113) is installed between the motion block assembly (106) and the cylindrical space (114) inside the housing (100) for serving as a buffer when the motion block assembly (106) performs the axial displacement;
-- The magnetic pole surfaces of the columnar magnet (107) and the columnar magnet (207) relative to the annular power generation coil set (104) include in the same polarity; or as shown in FIG. 4;
-- The magnetic pole surfaces of the columnar magnet (107) and the columnar magnet (207) relative to the annular power generation coil set (104) include in different polarities; FIG. 4 is a schematic structural view showing the interior of the annular power generation coil set (104) being coupled with the columnar magnet (107), and the exterior thereof being coupled with the outer magnet (117) relatively installed in different polarities to the columnar magnet (107), according to one embodiment of the present invention; The cross view of FIG. 4 is the same as what is shown in FIG. 2.

FIG. 5 is a schematic structural view showing the present invention being composed of the annular power generation coil sets (104), (204) arranged in the multiple segment format, and the interior of the annular power generation coil sets (104), (204) being coupled with the columnar magnets (107), (207), and the exterior thereof being coupled with the outer magnetic conductive members (108), (208), according to one embodiment of the preset invention.

The cross view of FIG. 5 is the same as what is shown in FIG. 2;

As shown in FIG. 5, it mainly consists of:
-- Housing (100): which is constituted by a material having poor magnetic conduction and poor electric conduction, formed in a hollow cylindrical shape and one inner end inwardly extended with a tubular annular coil set seat (101) with its distal end being extended for combining with the annular power generation coil set (104), then combined with the tubular annular coil set partition seat (201) and extendedly combined with the annular power generation coil set (204), and an annular space (103) is formed between the tubular annular coil set seat (101) and the inner hole of the housing (100), and the center of the tubular annular coil set seat (101) is formed with a round space (102), and the annular power generation coil sets (104), (204) are normal-polarity connected in parallel or in series thereby the voltage being able to accumulate during the power generation, as well as are installed with an output wire (105) for outputting the electric power generated by the annular power generation coil sets (104), (204);
-- Motion block assembly (206): which is constituted by a material having poor magnetic conduction and poor electric conduction, and is provided with a cup-shaped structure of motion block (110) for combining with the outer magnetic conductive member (108), and further combined with the cup-shaped structure partition ring (210) and extendedly combined with the outer magnetic conductive member (208), and the center of the cup-shaped structure of motion block (110) is provided with a center column of motion block (109) for combining with the columnar magnet (107), and combined with the center column of motion block (209) and further extendedly combined with the columnar magnet (207) while the periphery of the central column of motion block (109) and the cup-shaped structure of motion block (110) form an inner annular space of motion block (111) for being sleeved combined with the annular power generation coil sets (104), (204) and the tubular annular coil set partition seat (201) and the tubular annular coil set seat (101) and allowing to perform relative axial displacement, and the tubular annular coil set seat (101) and the round space (102) of the tubular annular coil set partition seat (201) is provided for being sleeved combined with the columnar magnets (107), (207) and the center column of motion block (109), (209) and allowing the mentioned components to perform relative axial displacement;
-- A first buffer member (112) is installed between the round space (102) of the tubular annular coil set seat (101) and the inner wall of the housing (100) for serving as a buffer while the center columns (109), (209) and the columnar magnets (107), (207) of the motion block and the outer magnetic conductive members (108), (208) perform axial displacement;
-- The interval of the columnar magnet (107) and the columnar magnet (207) partitioned by the center column of motion block (209), and the interval of the annular power generation coil set (104) and the annular power generation coil set (204) partitioned by the tubular annular coil set partition seat (201) enable the annular power generation coil set (104) and the annular power generation coil set (204) generate the voltage having the same phase, when the columnar magnet (107) and the columnar magnet (207) and the outer magnetic conductive member (108) and the outer magnetic conductive member (208) perform the axial reciprocal vibration to pass the annular power generation coil set (104) and the annular power generation coil set (204);
-- The cylindrical space (114) inside the housing (100) is provided for being sleeved with the outer periphery of the motion block assembly (106) and allowing to perform relative axial displacement, and a second buffer member (113) is installed between the motion block assembly (106) and the cylindrical space (114) inside the housing (100) for serving as a buffer when the motion block assembly (106) performs the axial displacement.

FIG. 6 is a schematic structural view showing the present invention being composed of the annular power generation coil sets (104), (204) arranged in the multiple segment format, the interior of the annular power generation coil sets (104), (204) being coupled with the columnar magnets (107), (207), and the exterior thereof being coupled with the outer magnets (117), (217) arranged in the multiple segment format and relatively installed in the same polarity with the columnar magnet (107), according to one embodiment of the preset invention.

The cross view of FIG. 6 is the same as what is shown in FIG. 2

As shown in FIG. 6, it mainly consists of:
-- Housing (100): which is constituted by a material having poor magnetic conduction and poor electric conduction, formed in a hollow cylindrical shape and one inner end inwardly extended with a tubular annular coil set seat (101) with its distal end being extended for combining with the annular power generation coil set (104), then combined with the tubular annular coil set partition seat (201) and extendedly combined with the annular power generation coil set (204), and an annular space (103) is formed between the tubular annular coil set seat (101) and the inner hole of the housing (100), and the center of the tubular annular coil set seat (101) is formed with a round space (102), and the annular power generation coil sets (104), (204) are normal-polarity connected in parallel or in series thereby the voltage being able to accumulate during the power generation, as well as are installed with an output wire (105) for outputting the electric power generated by the annular power generation coil sets (104), (204);
-- Motion block assembly (206): which is constituted by a material having poor magnetic conduction and poor electric conduction, and is provided with a cup-shaped structure of motion block (110) for combining with the outer magnetic (117), and further combined with the cup-shaped structure partition ring (210) and extendedly combined with the outer magnet (217), and the center of the cup-shaped structure of motion block (110) is provided with a center column of motion block (109) for combining with the columnar magnet (107), and combined with the center column of motion block (209) and further extendedly combined with the columnar magnet (207) while the periphery of the central column of motion block (109) and the cup-shaped structure of motion block (110) form an inner annular space of motion block (111) for being sleeved combined with the annular power generation coil sets (104), (204) and the tubular annular coil set partition seat (201) and the tubular annular coil set seat (101) and allowing to perform relative axial displacement, and the tubular annular coil set seat (101) and the round space (102) of the tubular annular coil set partition seat (201) is provided for being sleeved combined with the columnar magnets (107), (207) and the center column of motion block (109), (209) and allowing the mentioned components to perform relative axial displacement;
-- A first buffer member (112) is installed between the round space (102) of the tubular annular coil set seat (101) and the inner wall of the housing (100) for serving as a buffer while the center columns (109), (209) and the columnar magnets (107), (207) of the motion block and the outer magnets (117), (217) perform axial displacement;
-- The interval of the columnar magnet (107) and the columnar magnet (207) and the outer magnet (117) and the outer magnet (217) partitioned by the center column of motion block (209), and the interval of the annular power generation coil set (104) and the annular power generation coil set (204) partitioned by the tubular annular coil set partition seat (201) enable the annular power generation coil set (104) and the annular power generation coil set (204) generate the voltage having the same phase, when the columnar magnet (107) and the columnar magnet (207) and the outer magnet (117) and the outer magnet (217) perform the axial reciprocal vibration to pass the annular power generation coil set (104) and the annular power generation coil set (204);
-- The cylindrical space (114) inside the housing (100) is provided for being sleeved with the outer periphery of the motion block assembly (106) and allowing to perform relative axial displacement, and a second buffer member (113) is installed between the motion block assembly (106) and the cylindrical space (114) inside the housing (100) for serving as a buffer when the motion block assembly (106) performs the axial displacement;
-- The magnetic pole surfaces of the columnar magnet (107) and the columnar magnet (207) relative to the annular power generation coil set (104) and the magnetic pole surfaces of the outer magnet (117) and the outer magnet (217) relative to the annular power generation coil set (204) include in the same polarity; or as shown in FIG. 7;
-- The magnetic pole surfaces of the columnar magnet (107) and the columnar magnet (207) relative to the annular power generation coil set (104) and the magnetic pole surfaces of the outer magnet (117) and the outer magnet (217) relative to the annular power generation coil set (204) include in the different polarities; FIG. 7 is a schematic structural view showing the present invention being composed of the annular power generation coil sets (104), (204) arranged in the multiple segment format, and the interior of the annular power generation coil sets (104), (204) being coupled with the columnar magnets (107), (207), and the exterior thereof being coupled with the outer magnets (117), (217) arranged in the multiple segment format and relatively installed in different polarities to the columnar magnet (107), according to one embodiment of the preset invention.

The cross view of FIG. 7 is the same as what is shown in FIG. 2.

The columnar magnet (107), the columnar magnet (207), the annular power generation coil set (104), the annular power generation coil set (204), the outer magnetic conductive member (108) and the outer magnetic conductive member (208), shown in FIG. 5, are all composed of two units or more than two units;

The columnar magnet (107), the columnar magnet (207), the annular power generation coil set (104), the annular power generation coil set (204), the outer magnet (117) and the outer magnet (217), shown in FIG. 6 and FIG. 7, are all composed of two units or more than two units;

The columnar magnet (107), the columnar magnet (207), the outer magnetic conductive member (108) and the outer magnetic conductive member (208), shown in FIG. 5, are all composed of two units or more than two units, and the annular power generation coil set (104) is composed of one unit;

The columnar magnet (107), the columnar magnet (207), the outer magnet (117) and the outer magnet (217), shown in FIG 6 and FIG. 7, are all composed of two units or more than two units, and the annular power generation coil set (104) is composed of one unit.

## Claims

1. A reciprocal vibration type power generator equipped with a magnetic motion block, the magnetic motion block having an inner columnar and an outer annular portion, the generator comprising a columnar magnet (107) in a round columnar shape having different magnetic poles in the axial direction, and an outer magnetic conductive member (108) at the exterior of and enclosing the columnar magnet (107), wherein the columnar magnet (107) and the outer magnetic conductive member (108) are arranged to form a motion block assembly (106) and are concentrically arranged relative to one another to form a magnetic path for performing the synchronous axial displacement, and the outer diameter of the columnar magnet (107) is smaller than the inner diameter of the outer magnetic conductive member (108) and formed with an annular gap allowing an annular power generation coil set (104) to pass therebetween, such that when the magnetic motion block and the coil set (104) axially perform relative reciprocal axial displacing vibrations, the annular power generation coil set (104) generates electric power according to Lenz Law, wherein the generator further comprises:
a housing (100): which is constituted by a material having poor magnetic conduction and poor electric conduction, formed in a hollow cylindrical shape with one inner end inwardly extended forming a tubular annular coil set seat (101) with its distal end being extended for connecting to the annular power generation coil set (104), wherein an annular space (103) is formed between the tubular annular coil set seat (101) and the inner hole of the housing (100), and the center of the tubular annular coil set seat (101) is formed with a round space (102), and wherein the annular power generation coil set (104) is installed with an output wire (105) for outputting the electric power generated by the annular power generation coil set (104);
a motion block assembly (106) which is constituted by a material having poor magnetic conduction and poor electric conduction comprising a cup-shaped structure for combining with the outer magnetic conductive member (108), and a center column of at the center of the cup-shaped structure for combining with the columnar magnet (107) wherein the periphery of the central column of the motion block (109) and the cup-shaped structure of the motion block (110) form an inner annular space (111) for accommodating the annular power generation coil set (104) and the tubular annular coil set seat (101) and allowing the the motion block and the coil set to perform relative axial displacement, and wherein the round space (102) of the tubular annular coil set seat (101) is provided for accommodating the columnar magnet (107) and the center column of the motion block (109) and allowing the motion block and the coil set to perform relative axial displacement;
a first buffer member (112) installed between the round space (102) of the tubular annular coil set seat (101) and the inner wall of the housing (100) for serving as a buffer while the center column (109) and the columnar magnet (107) of the motion block assembly (106) and the outer magnetic conductive member (108) perform axial displacement;
wherein upon axial reciprocation of the motion block the columnar magnet (107) and the outer magnetic conductive member (108) pass through the annular power generation coil set (104), enabling the annular power generation coil set (104) to generate power;
wherein a cylindrical space (114) is provided inside the housing (100) for accommodating the outer periphery of the motion block assembly (106) and allowing the relative axial displacement, and wherein a second buffer member (113) is installed between the motion block assembly (106) and the cylindrical space (114) inside the housing (100) for serving as a buffer when the motion block assembly (106) performs its axial displacement.

2. A reciprocal vibration type power generator equipped with a magnetic motion block, the magnetic motion block having an inner columnar and an outer annular portion as claimed in claim 1, wherein the interior of the annular power generation coil set (104) is coupled with the columnar magnet (107), and the exterior of the annular power generation coil set (104) is coupled with an outer magnet (117) relatively installed with the same polarity as the columnar magnet (107), wherein the outer magnet (117) replaces the outer magnetic conductive member (108) of claim 1, wherein the generator further comprise;
a housing (100): which is constituted by a material having poor magnetic conduction and poor electric conduction, formed in a hollow cylindrical shape with one inner end inwardly extended forming a tubular annular coil set seat (101) with its distal end being extended for connecting to the annular power generation coil set (104), wherein an annular space (103) is formed between the tubular annular coil set seat (101) and the inner hole of the housing (100), and the center of the tubular annular coil set seat (101) is formed with a round space (102), and wherein the annular power generation coil set (104) is installed with an output wire (105) for outputting the electric power generated by the annular power generation coil set (104);
a motion block assembly (106) which is constituted by a material having poor magnetic conduction and poor electric conduction comprising a cup-shaped structure for combining with the outer magnet (117) and a center column at the center of the cup-shaped structure for combining with the columnar magnet (107) wherein the periphery of the central column of the motion block (109) and the cup-shaped structure of the motion block (110) form an inner annular space (111) for accommodating the annular power generation coil set (104) and the tubular annular coil set seat (101) and allowing the motion block and the coil set to perform relative axial displacement, and wherein the round space (102) of the tubular annular coil set seat (101) is provided for accommodating the columnar magnet (107) and the center column of the motion block (109) and allowing the motion block and the coil set to perform relative axial displacement;
a first buffer member (112) installed between the round espace (102) of the tubular annular coil set seat (101) and the inner wall of the housing (100) for serving as a buffer while the center columns (109) and the columnar magnet (107) of the motion block and the outer magnet (117) perform axial displacement;
wherein upon axial reciprocation of the motion block the columnar magnet (107) and the outer magnet (117) pass through the annular power generation coil set (104), enabling the annular power generation coil set (104) to generate a power;
wherein a cylindrical space (114) is provided inside the housing (100) for accommodating the outer periphery of the motion block assembly (106) and allowing the relative axial displacement, and wherein a second buffer member (113) is installed between the motion block assembly (106) and the cylindrical space (114) inside the housing (100) for serving as a buffer when the motion block assembly (106) performs its axial displacement;
wherein the magnetic pole surfaces of the columnar magnet (107) and the outer magnet (117) relative to the annular power generation coil set (104) have the same polarity.

3. A reciprocal vibration type power generator equipped a magnetic motion block, the magnetic motion block having an inner columnar and an outer portion as claimed in claim 2, wherein the magnetic pole surfaces of the columnar magnet (107) and the outer magnet (117) relative to the annular power generation coil set (104) have different polarities.

4. A reciprocal vibration type power generator equipped with a magnetic motion block, the magnetic motion block having an inner columnar and an outer annular portion as claimed in claim 1, wherein the generator comprises an annular power generation coil set and a further annular power generation coil set (204) axially displaced from the annular power generation coil set (104), , wherein the interior of the annular power generation coil sets (104), (204) is coupled with the columnar magnets (107), (207), and the exterior thereof being coupled with the outer magnetic conductive members (108), (208), wherein the generator further comprises:
a housing (100) which is constituted by a material having poor magnetic conduction and poor electric conduction, formed an a hollow cylindrical shape with one inner end inwardly extended forming a tubular annular coil set seat (101) with its distal end being extended for connecting to the annular power generation coil set (104), and combined with a further tubular annular coil set partition seat (201) being extendedly connected to the annular power generation coil set (204), wherein an annular space (103) is formed between the tubular annular coil set seat (101) and the inner hole of the housing (100), and the center of the tubular annular coil set seat (101) is formed with a round space (102), and wherein the annular power generation coil sets (104), (204) are connected in parallel or in series such that the voltage is able to accumulate during the power generation, and the annular power generation coil sets (104), (204) are each installed with an output wire (105) for outputting the electric power generated by the annular power generation coil sets (104), (204);
a motion block assembly (206): which is constituted by a material having poor magnetic conduction and poor electric conduction comprising a cup-shaped structure for combining with the outer magnetic conductive member (108) and a cup-shaped structure partition ring (210) extendedly combined with a further outer magnetic conductive member (208), and a center column of motion block (109) at the center of the cup-shaped structure for combining with the columnar magnets (107) and a further center column of motion block (209) extendedly combined with a further columnar magnet (207), block the periphery of the central column of the motion block (109) and the cup-shaped structure of the motion block (110) form an inner annular space (111) for accommodating the annular power generation coil sets (104), (204) and the further tubular annular coil set partition seat (201) and the tubular annular coil set seat (101) and allowing to perform relative axial displacement, and wherein the tubular annular coil set seat (101) and the round space (102) of the further tubular annular coil set partition seat (201) is provided for accommodating the columnar magnets (107), (207) and the center column of the motion bocks (109), (209) and allowing the motion blocks and the coil sets to perform relative axial displacement;
a first buffer member (112) installed between the round space (102) of the tubular annular coil set seat (101) and the inner wall of the housing (100) for serving as a buffer while the center columns (109), (209) and the columnar magnets (107), (207) of the motion block and the outer magnetic conductive members (108), (208) perform axial displacement;
wherein the interval of the columnar magnet (107) and the further columnar magnet (207) partitioned by the further column of motion block (209), and the interval of the annular power generation coil set (104) and the further annular power generation coil set (204) partitioned by the tubular annular coil set partition seat (201) enable the annular power generation coil set (104) and the further annular power generation coal set (204) to generated a voltage having the same phase, wherein upon axial reciprocation of motion block the columnar magnet (107) and the columnar magnet (207) and the outer magnetic conductive member (108) and the outer magnetic conductive member (208) pass through the annular power generation coil set (104) and the further annular power generation coil set (204) to generate a power;
wherein a cylindrical space (114) is provided inside the housing for accommodating the outer periphery of the motion block assembly (106) and allowing the relative axial displacement, and a second buffer member (113) is installed between the motion block assembly (106) and the cylindrical space (114) inside the housing (100) for serving as a buffer when the motion block assembly (106) performs its axial displacement.

5. A reciprocal vibration type power generator equipped with a magnetic motion block having an inner columnar and an outer annular as claimed in claim 2, wherein the generator comprises an annular power generation coil set (104) and a further annular power generation coil set (204) axially displaced from the annular power generation coil (104), wherein the interior of the annular power generation coil sets (104), (204) is coupled with columnar magnets (107, 207), and the exterior of the annular power generating coil sets (104, 204) being coupled with the outer magnets (117, 217) arranged relatively with the same polarity as the columnar magnet (107), wherein the generator further comprises:
a housing (100): which is constituted by a material having poor magnetic conduction and poor electric conduction, formed in a hollow cylindrical shape with one inner end inwardly extended forming a tubular annular coil set seat (101) with its distal end being extended for connecting to the annular power generation coil set (104), and combined with a further tubular annular coil set partition seat (201) extendedly connected to the further annular power generation coil set (204), wherein an annular space (103) is formed between the tubular annular coil set seat (101) and the inner hole of the housing (100), and the center of the tubular annular coil set seat (101) is formed with a round space (102), and wherein the annular power generation coil sets (104, 204) are connected in parallel or in series such that the voltage is able to accumulate during the power generation, and the annular power generation coil sets (104, 204) are each installed with an output wire (105) for outputting the electric power generated by the annular power generation coil sets (104, 204);
a motion block assembly (206) which is constituted by a material having poor magnetic conduction and poor electric conduction comprising a cup-shaped structure for combining with the outer magnet (117), and a cup-shaped structure partition ring (210) extendedly combined with the further outer magnet (217), and a center column (109) at the center of the cup-shaped structure for combining with the columnar magnet (107) and a further center column of motion block (209) extendedly combined with a further columnar magnet (207), wherein the periphery of the central column of the motion block (109) and the cup-shaped structure of the motion block (110) form an inner annular space (111) for accommodating the annular power generation coil sets (104), (204) and the further tubular annular coil set partition seat (201) and the tubular annular coil set seat (101) and allowing to perform relative axial displacement, and wherein the tubular annular coil set seat (101) and the round space (102) of the further tubular annular coil set partition seat (201) is provided for accommodating the columnar magnets (107, 207) and the center column of the motion blocks (109), (209) and allowing the motion blocks and the coil sets to perform relative axial displacement;
a first buffer member (112) installed between the round space (102) of the tubular annular coil set seat (101) and the inner wall of the housing (100) for serving as a buffer while the center columns (109), (209) and the columnar magnets (107), (207) of the motion block and the outer magnets (117), (217) perform axial displacement;
wherein ther interval of the columnar magnet (107) and the further columnar magnet (207) and the outer magnet (117) and the further outer magnet (217) partitioned by the further center column of motion block (209), and the interval of the annular power generation coil set (104) and the annular power generation coil set (204) partitioned by the tubular annular coil set partition seat (201) enable the annular power generation coil set (104) and the further annular power generation coil set (204) to generate the voltage having the same phase, wherein upon axial reciprocation of motion block the columnar magnet (107) and the further columnar magnet (207) and the outer magnet (117) and the further outer magnet (217) to pass through the annular power generation coil set (104) and the further annular power generation coil set (204) to generate power;
wherein a cylindrical space (114) is provided inside the housing for accommodating the outer periphery of the motion block assembly (106) and allowing the relative axial displacement and a second buffer member (113) is installed between the motion block assembly (106) and the cylindrical space (114) inside the housing (100) for serving as a buffer when the motion block assembly (106) performs its axial displacement; and
wherein the magnetic pole surfaces of the columnar magnet (107) and the further columnar magnet (207) relative to the annular power generation coil set (104) and the magnetic pole surfaces of the outer magnet (117) and the further outer magnet (217) relative to the annular power generation coil set (204) have the same polarity.

6. A reciprocal vibration type power generator equipped with a magnetic motion block, the magnetic motion block having an inner columnar and an outer annular magnetic motion block portion as claimed in claim 5, wherein the magnetic pole surfaces of the columnar magnet (107) and the outer magnet (117) relative to the annular power generation coil set (104) and the magnetic pole surfaces of the further columnar magnet (207) and the further outer magnet (217) relative to the further annular power generation coil set (204) have the different polarities.

7. A reciprocal vibration type power generator equipped with a magnetic motion block, the magnetic motion block having an inner columnar and an outer annular portion as claimed in claim 4, wherein the columnar magnet (107), the columnar magnet (207), the annular power generation coil set (104), the annular power generation coil set (204), the outer magnetic conductive member (108) and the outer magnetic conductive member (208) are all composed of two units or more than two units.

8. A reciprocal vibration type power generator equipped with a magnetic motion block, the magnetic motion block having an inner columnar and outer annular portion as claimed in claim 5, wherein the columnar magnet (107), the columnar magnet (207), the annular power generation coil set (104), the annular power generation coil set (204), the outer magnet (117) and the outer magnet (217) are all composed of two units or more than two units.

9. A reciprocal vibration type power generator equipped with a magnetic motion block, the magnetic potion block having an inner columnar and an outer annular portion as claimed in claim 6, wherein the columnar magnet (107), the columnar magnet (207), the annular power generation coil set (104), the annular power generation coil set (204), the outer magnet (117) and the outer magnet (217) are all composed of two units or more than two units.

10. A reciprocal vibration type power generator equipped with a magnetic motion block, the magnetic motion block having an inner columnar and an outer annular portion as claimed in claim 4, wherein the columnar magnet (107), the colunmar magnet (207), the outer magnetic conductive member (108) and the outer magnetic conductive member (208) are all composed of two units or more than two units, and the annular power generation coil set (104) is composed of one unit.

11. A reciprocal vibration type power generator equipped with a magnetic motion block, the magnetic motion block having an inner columnar and an outer annular portion as claimed in claim 5, wherein the columnar magnet (107), the columnar magnet (207), the outer magnet (117) and the outer magnet (217) are all composed of two units or more than two units, and the annular power generation coil set (104) is composed of one unit.

12. A reciprocal vibration type power generator equipped with a magnetic motion block, the magnetic motion block having an inner columnar and an outer annular magnetic motion block as claimed in claim 6, wherein the columnar magnet (107), the columnar magnet (207), the outer magnet (117) and the outer magnet (217) are all composed of two units or more than two units, and the annular power generation coil set (104) is composed of one unit.

## Patentansprüche

1. Ein Stromgenerator der kopplungssymmetrischen Schwingungs-Art, ausgestattet mit einem magnetischen Bewegungsblock; wobei der magnetische Bewegungsblock einen inneren säulenförmigen und einen äußeren ringförmigen Bereich aufweist. Der Generator umfasst einen säulenförmigen Magneten (107) in einer runden säulenförmigen Form, der verschiedene Magnetpole in axialer Richtung aufweist, und ein äußeres magnetisches leitendes Glied (108), das an der Außenseite des säulenförmigen Magneten (107) angebracht ist und diesen umschließt, wobei der säulenförmige Magnet (107) und das äußere magnetische leitende Glied (108) so ausgerichtet sind, dass sie eine Bewegungsblockbaugruppe (106) ausbilden und konzentrisch zueinander ausgerichtet sind und so eine Magnetbahn zur Ausführung der synchronen Axialverschiebung ausbilden, und wobei der Außendurchmesser des säulenförmigen Magneten kleiner (107) als der Innendurchmesser des äußeren magnetischen leitenden Glieds (108) ist und wobei ein ringförmiger Spalt gebildet wird, durch den ein ringförmiger Stromerzeugungsspulensatz (104) passt, sodass der ringförmige Stromerzeugungsspulensatz (104) elektrischen Strom entsprechend dem Lenz'schen Gesetz erzeugt, wenn der magnetische Bewegungsblock und der Spulensatz (104) in axialer Richtung relative reziproke Axialverschiebungsschwingungen ausführen, wobei der Generator ferner umfasst:
Ein Gehäuse (100), das aus einem Material hergestellt ist, das schlechte magnetische und elektrische Leitfähigkeiten aufweist, wobei das Gehäuse in hohler Zylinderform geformt ist und wobei ein inneres Ende nach innen reicht und einen tubulären ringförmigen Spulensatzsitz (101) ausbildet, und wobei das Distalende so erweitert ist, dass eine Verbindung zum ringförmigen Stromerzeugungsspulensatz (104) hergestellt werden kann, wobei ein ringförmiger Raum (103) zwischen dem tubulären ringförmigen Spulensatzsitz (101) und der inneren Gehäusebohrung (100) gebildet wird, und wobei in der Mitte des tubulären ringförmigen Spulensatzsitzes (104) ein runder Raum (102) gebildet wird, und wobei am ringförmigen Stromerzeugungsspulensatz (104) ein Ausspeisungsdraht (105) befestigt ist, über den der elektrische Strom, der vom ringförmigen Stromerzeugungsspulensatz (104) erzeugt wurde, ausgespeist wird;
Eine Bewegungsblockbaugruppe (106), die aus einem Material hergestellt ist, das schlechte magnetische und elektrische Leitfähigkeiten aufweist, umfassend eine kelchförmige Struktur zur Verbindung mit dem äußeren magnetischen leitenden Glied (108) und eine mittlere Säule in der Mitte der kelchförmigen Struktur zur Verbindung mit dem säulenförmigen Magneten (107), wobei die Peripherie der mittleren Säule des Bewegungsblocks (109) und die kelchförmige Struktur des Bewegungsblocks (110) einen inneren ringförmigen Raum (111) ausbilden, um den ringförmigen Stromerzeugungsspulensatz (104) und den tubulären ringförmigen Spulensatzsitz (101) aufzunehmen, sodass der Bewegungsblock und der Spulensatz eine relative Axialverschiebung ausführen können, und wobei der runde Bereich (102) des tubulären ringförmigen Spulensatzsitzes (101) zur Aufnahme des säulenförmigen Magneten (107) und der mittleren Säule des Motorblocks (109) dient, sodass der Motorblock und der Spulensatz eine relative Axialverschiebung ausführen können;
Ein erstes Pufferglied (112), das zwischen dem runden Raum (102) des tubulären ringförmigen Spulensatzsitzes (101) und der inneren Wand des Gehäuses (100) montiert ist, um als Puffer zu dienen, während die mittlere Säule (109) und der säulenförmige Magnet (107) der Bewegungsblockbaugruppe (106) und das äußere magnetische leitende Glied (108) eine Axialverschiebung ausführen; und wobei bei der Axialverschiebung des Bewegungsblocks der säulenförmige Magnet (107) und das äußere magnetische leitende Glied (108) den ringförmigen Stromerzeugungsspulensatz (104) durchfahren, was dem ringförmigen Stromerzeugungsspulensatz (104) ermöglicht Strom zu erzeugen;
wobei ein zylinderförmiger Raum (114) im Innern des Gehäuses (100) zur Aufnahme der äußeren Peripherie der Bewegungsblockbaugruppe (106) bereitgestellt wird und die relative Axialverschiebung ermöglicht, und wobei ein zweites Pufferglied (113) zwischen der Bewegungsblockbaugruppe (106) und dem zylindrischen Raum (114) im Innern des Gehäuses (100) montiert ist, um als Puffer zu dienen, während die Bewegungsblockbaugruppe (106) die Axialverschiebung ausführt.

2. Ein Stromgenerator der kopplungssymmetrischen Schwingungs-Art, ausgestattet mit einem magnetischen Bewegungsblock; wobei der magnetische Bewegungsblock einen inneren säulenförmigen und einen äußeren ringförmigen Bereich aufweist, wie in Anspruch 1 aufgeführt, wobei die Innenseite des ringförmigen Stromerzeugungsspulensatzes (104) mit dem säulenförmigen Magneten (107) gekoppelt ist, und wobei die Außenseite des ringförmigen Stromerzeugungsspulensatzes (104) mit einem äußeren Magneten (117) gekoppelt ist, der im Verhältnis zum säulenförmigen Magneten (107) dieselbe Polarität aufweist, wobei der äußere Magnet (117) das äußere magnetische leitende Glied (108) aus Anspruch 1 ersetzt, wobei der Generator ferner umfasst;
Ein Gehäuse (100), das aus einem Material hergestellt ist, das schlechte magnetische und elektrische Leitfähigkeiten aufweist, wobei das Gehäuse in hohler Zylinderform geformt ist und wobei ein inneres Ende nach innen reicht und einen tubulären ringförmigen Spulensatzsitz (101) ausbildet, und wobei das Distalende so erweitert ist, dass eine Verbindung zum ringförmigen Stromerzeugungsspulensatz (104) hergestellt werden kann; wobei ein ringförmiger Raum (103) zwischen dem tubulären ringförmigen Spulensatzsitz (101) und der inneren Bohrung des Gehäuses (100) gebildet wird, und wobei in der Mitte des tubulären ringförmigen Spulensatzsitzes (101) ein runder Raum (102) gebildet wird, und wobei am ringförmigen Stromerzeugungsspulensatz (104) ein Ausspeisungsdraht (105) befestigt ist, über den der elektrische Strom, der vom ringförmigen Stromerzeugungsspulensatz (104) erzeugt wurde, ausgespeist wird;
Eine Bewegungsblockbaugruppe (106), die aus einem Material hergestellt ist, das schlechte magnetische und elektrische Leitfähigkeiten aufweist, umfassend eine kelchförmige Struktur zur Verbindung mit dem äußeren Magneten (117) und eine mittlere Säule in der Mitte der kelchförmigen Struktur zur Verbindung mit dem säulenförmigen Magneten (107), wobei die Peripherie der mittleren Säule des Bewegungsblocks (109) und die kelchförmige Struktur des Bewegungsblocks (110) einen inneren ringförmigen Raum (111) ausbilden, um den ringförmigen Stromerzeugungsspulensatz (104) und den tubulären ringförmigen Spulensatzsitz (101) aufzunehmen, sodass der Bewegungsblock und der Spulensatz eine relative Axialverschiebung ausführen können, und wobei der runde Raum (102) des tubulären ringförmigen Spulensatzsitzes (101) zur Aufnahme des säulenförmigen Magneten (107) und der mittleren Säule des Motorblocks (109) dient, sodass der Motorblock und der Spulensatz eine relative Axialverschiebung ausführen können;
Ein erstes Pufferglied (111), das zwischen dem runden Raum (102) des tubulären ringförmigen Spulensatzsitzes (101) und der inneren Wand des Gehäuses (100) montiert ist, um als Puffer zu dienen, während die mittlere Säule (109) und der säulenförmige Magnet (107) der Bewegungsblockbaugruppe und der äußere Magnet (117) eine Axialverschiebung ausführen;
und wobei bei der Axialverschiebung des Bewegungsblocks der säulenförmige Magnet (107) und der äußere Magnet (117) den ringförmigen Stromerzeugungsspulensatz (104) durchfahren, was dem ringförmigen Stromerzeugungsspulensatz (104) ermöglicht Strom zu erzeugen;
wobei ein zylinderförmiger Raum (114) im Innern des Gehäuses (100) zur Aufnahme der äußeren Peripherie der Bewegungsblockbaugruppe (106) bereitgestellt wird und die relative Axialverschiebung ermöglicht, und wobei ein zweites Pufferglied (113) zwischen der Bewegungsblockbaugruppe (106) und dem zylinderförmigen Raum (114) im Innern des Gehäuses (100) montiert ist, um als Puffer zu dienen, während die Bewegungsblockbaugruppe (106) die Axialverschiebung ausführt.
wobei die Magnetpoloberflächen des säulenförmigen Magneten (107) und des äußeren Magneten (117) im Verhältnis zum ringförmigen Stromerzeugungsspulensatz (104) dieselbe Polarität aufweisen.

3. Ein Stromgenerator der kopplungssymmetrischen Schwingungs-Art, ausgestattet mit einem magnetischen Bewegungsblock, wobei der magnetische Bewegungsblock einen inneren säulenförmigen und einen äußeren ringförmigen Bereich aufweist, wie in Anspruch 2 aufgeführt, wobei die Magnetpoloberflächen des säulenförmigen Magneten (107) und des äußeren Magneten (117) im Verhältnis zum ringförmigen Stromerzeugungsspulensatz (104) unterschiedliche Polaritäten aufweisen:

4. Ein Stromgenerator der kopplungssymmetrischen Schwingungs-Art, ausgestattet mit einem magnetischen Bewegungsblock, wobei der magnetische Bewegungsblock einen inneren säulenförmigen und einen äußeren ringförmigen Bereich aufweist, wie in Anspruch 1 aufgeführt, wobei der Generator einen ringförmigen Stromerzeugungsspulensatz und einen weiteren ringförmigen Stromerzeugungsspulensatz (204) umfasst, der in axiale Richtung zum ringförmigen Stromerzeugungsspulensatz (104) verschoben ist, wobei die Innenseite der ringförmigen Stromerzeugungsspulensätze (104), (204) mit den säulenförmigen Magneten (107), (207) gekoppelt ist; und wobei deren Außenseite mit den äußeren magnetischen leitenden Gliedern (108), (208) gekoppelt ist, wobei der Generator ferner umfasst:
Ein Gehäuse (100), das aus einem Material hergestellt ist, das schlechte magnetische und elektrische Leitfähigkeiten aufweist, wobei das Gehäuse in hohler Zylinderform geformt ist und wobei ein inneres Ende nach innen reicht und einen tubulären ringförmigen Spulensatzsitz (101) ausbildet, und wobei das Distalende so erweitert ist, dass eine Verbindung zum ringförmigen Stromerzeugungsspulensatz (104) hergestellt werden kann; und kombiniert mit einem weiteren tubulären ringförmigen Spulensatztrennsitz (201), welcher mit dem ringförmigen Stromerzeugungsspulensatz (204) erweitert verbunden ist, wobei ein ringförmiger Raum (103) zwischen dem tubulären ringförmigen Spulensatzsitz (101) und der inneren Bohrung des Gehäuses (100) gebildet wird und wobei die Mitte des tubulären ringförmigen Spulensatzsitzes (101) mit einem runden Raum (102) gebildet wird, und wobei die ringförmigen Stromerzeugungsspulensätze (104), (204) parallel oder in Reihe geschaltet sind, sodass die Spannung während der Stromerzeugung gespeichert werden kann, und wobei die ringförmigen Stromerzeugungsspulensätze (104), (204) jeweils einen Ausspeisungsdraht (105) aufweisen, über den der elektrische Strom, der von den ringförmigen Stromerzeugungsspulensätzen (104), (204) erzeugt wird, ausgespeist werden kann;
Eine Bewegungsblockbaugruppe (206), die aus einem Material hergestellt ist, das schlechte magnetische und elektrische Leitfähigkeiten aufweist, umfassend eine kelchförmige Struktur zur Verbindung mit dem äußeren leitenden Glied (108) und einen kelchförmigen Strukturtrennring (210), erweitert verbunden mit einem weiteren äußeren magnetischen leitenden Glied (208), und eine mittlere Säule des Bewegungsblocks (109) in der Mitte der kelchförmigen Struktur zur Verbindung mit dem säulenförmigen Magneten (107) und eine weitere mittlere Säule des Bewegungsblocks (209), erweitert verbunden mit einem weiteren säulenförmigen Magneten (207); und wobei die Peripherie der mittleren Säule des Bewegungsblocks (109) und die kelchförmige Struktur des Bewegungsblocks (110) einen inneren ringförmigen Raum (111) zur Aufnahme der ringförmigen Stromerzeugungsspulensätze (104); (204), des weiteren tubulären ringförmigen Spulensatztrennsitzes (201) und des tubulären ringförmigen Spulensatzsitzes (101) ausbilden, wodurch eine relative Axialverschiebung ermöglicht wird, und wobei der tubuläre ringförmige Spulensatzsitz (101) und der runde Raum (102) des weiteren ringförmigen Spulensatztrennsitzes (201) zur Aufnahme der säulenförmigen Magnete (107), (207) und der mittleren Säule der Bewegungsblöcke (109), (209) dient, sodass die Bewegungsblöcke und die Spulensätze eine relative Axialverschiebung ausführen können;
Ein erstes Pufferglied (112), das zwischen dem runden Raum (102) des ringförmigen Spulensatzsitzes (101) und der inneren Wand des Gehäuses (100) montiert ist, um als Puffer zu dienen, während die mittleren Säulen (109), (209) und die säulenförmigen Magneten (107), (207) des Bewegungsblocks und die äußeren magnetischen leitenden Glieder (108), (208) eine Axialverschiebung ausführen;
wobei der Abstand zwischen dem säulenförmigen Magneten (107) und dem weiteren säulenförmigen Magneten (207), die durch die weitere mittlere Säule des Bewegungsblocks (209) voneinander getrennt sind, und der Abstand zwischen dem ringförmigen Stromerzeugungsspulensatz (104) und dem weiteren ringförmigen Stromerzeugungsspulensatz (204), die durch den ringförmigen Spulensatztrennsitz (201) voneinander getrennt sind, dafür sorgen, dass der ringförmige Stromerzeugungsspulensatz (104) und der weitere ringförmige Stromerzeugungsspulensatz (204) eine Spannung derselben Phase erzeugen, wobei bei der Axialverschiebung des Bewegungsblocks der säulenförmige Magnet (107) und der säulenförmige Magnet (207) und das äußere magnetische leitende Glied (108) und das äußere magnetische leitende Glied (208) den ringförmigen Stromerzeugungsspulensatz (104) und den weiteren ringförmigen Stromerzeugungsspulensatz durchfahren (204), um einen Strom zu erzeugen;
wobei ein zylinderförmiger Raum (114) im Innern des Gehäuses bereitgestellt wird, um die äußere Peripherie der Bewegungsblockbaugruppe (106) aufzunehmen und die relative Axialverschiebung zuzulassen, und wobei ein zweites Pufferglied (113) zwischen der Bewegungsblockbaugruppe (106) und dem zylinderförmigen Raum (114) im Innern des Gehäuses (100) montiert ist, um als Puffer zu dienen, während die Bewegungsblockbaugruppe (106) die Axialverschiebung ausführt.

5. Ein Stromgenerator der kopplungssymmetrischen Schwingungs-Art, ausgestattet mit einem magnetischen Bewegungsblock, welcher einen inneren säulenförmigen und einen äußeren ringförmigen Bereich wie in Anspruch 2 aufgeführt aufweist, wobei der Generator einen ringförmigen Stromerzeugungsspulensatz (104) und einen weiteren ringförmigen Stromerzeugungsspulensatz (204) umfasst, die axial zur ringförmigen Stromerzeugungsspule (104) verschoben sind, wobei die Innenseite der ringförmigen Stromerzeugungsspulensätze (104, 204) mit den säulenförmigen Magneten (107, 207) gekoppelt ist, und wobei die Außenseite der ringförmigen Stromerzeugungsspulensätze (104, 204) mit den äußeren Magneten (117, 217) gekoppelt ist und dieselbe Polarität wie der säulenförmige Magnet (107) aufweist, wobei der Generator ferner umfasst:
Ein Gehäuse (100), das aus einem Material hergestellt ist, das schlechte magnetische und elektrische Leitfähigkeiten aufweist, wobei das Gehäuse in hohler Zylinderform geformt ist und wobei ein inneres Ende nach innen reicht und einen tubulären ringförmigen Spulensatzsitz (101) ausbildet, und wobei das Distalende so erweitert ist, dass eine Verbindung zum ringförmigen Stromerzeugungsspulensatz (104) hergestellt werden kann; und kombiniert mit einem weiteren tubulären ringförmigen Spulensatztrennsitz (201), welcher erweitert mit dem ringförmigen Stromerzeugungsspulensatz (204) verbunden ist, wobei ein ringförmiger Raum (103) zwischen dem tubulären ringförmigen Spulensatzsitz (101) und der inneren Bohrung des Gehäuses (100) geformt wird, und die Mitte des tubulären ringförmigen Spulensatzsitzes (101) mit einem runden Raum (102) gebildet wird, und wobei die ringförmigen Stromerzeugungsspulensätze (104, 204) parallel oder in Reihe geschaltet sind, sodass die Spannung während der Stromerzeugung gespeichert werden kann, und wobei die ringförmigen Stromerzeugungsspulensätze (104, 204) jeweils einen Ausspeisungsdraht (105) aufweisen, über den der elektrische Strom, der von den ringförmigen Spulensätzen (104), (204) erzeugt wird, ausgespeist werden kann;
Eine Bewegungsblockbaugruppe (206), die aus einem Material hergestellt ist, das schlechte magnetische und elektrische Leitfähigkeiten aufweist, umfassend eine kelchförmige Struktur zur Verbindung mit dem äußeren Magneten (117) und einen kelchförmigen Strukturtrennring (210), erweitert verbunden mit dem weiteren äußeren Magneten (217), und eine mittlere Säule (109) in der Mitte der kelchförmigen Struktur zur Verbindung mit dem säulenförmigen Magneten (107) und eine weitere mittlere Säule des Bewegungsblocks (209), erweitert verbunden mit einem weiteren säulenförmigen Magneten (207); wobei die Peripherie der mittleren Säule des Bewegungsblocks (109) und die kelchförmige Struktur des Bewegungsblocks (110) einen inneren ringförmigen Raum (111) zur Aufnahme der ringförmigen Stromerzeugungsspulensätze (104); (204), des weiteren tubulären ringförmigen Spulensatztrennsitzes (201) und des tubulären ringförmigen Spulensatzsitzes (101) ausbilden, wodurch eine relative Axialverschiebung ermöglicht wird, und wobei der tubuläre ringförmige Spulensatzsitz (101) und der runde Raum (102) des weiteren tubulären ringförmigen Spulensatztrennsitzes (201) zur Aufnahme der säulenförmigen Magnete (107, 207) und der mittleren Säule der Bewegungsblöcke (109), (209) dient, sodass die Bewegungsblöcke und die Spulensätze eine relative Axialverschiebung ausführen können;
Ein erstes Pufferglied (112), das zwischen dem runden Raum (102) des ringförmigen Spulensatzsitzes (101) und der inneren Wand des Gehäuses (100) montiert ist, um als Puffer zu dienen, während die mittleren Säulen (109), (209) und die säulenförmigen Magneten (107), (207) des Bewegungsblocks und die äußeren Magnete (117), (217) eine Axialverschiebung ausführen;
wobei der Abstand zwischen dem säulenförmigen Magneten (107) und dem weiteren säulenförmigen Magneten (207) und zwischen dem äußeren Magneten (117) und dem weiteren äußeren Magneten (217), die durch die weitere Säule des Bewegungsblocks (209) voneinander getrennt sind, und der Abstand zwischen dem ringförmigen Stromerzeugungsspulensatz (104) und dem ringförmigen Stromerzeugungsspulensatz (204), die durch den tubulären ringförmigen Spulensatztrennsitz (201) voneinander getrennt sind, dafür sorgen, dass der ringförmige Stromerzeugungsspulensatz (104) und der weitere ringförmige Stromerzeugungsspulensatz (204) die Spannung derselben Phase erzeugen, wobei bei der Axialverschiebung des Bewegungsblocks der säulenförmige Magnet (107) und der weitere säulenförmige Magnet (207) und der äußere Magnet (117) und der weitere äußere Magnet (217) den ringförmigen Stromerzeugungsspulensatz (104) und den weiteren ringförmigen Stromerzeugungsspulensatz (204) durchfahren, um einen Strom zu erzeugen;
wobei ein zylinderförmiger Raum (114) im Innern des Gehäuses bereitgestellt wird, um die äußere Peripherie der Bewegungsblockbaugruppe (106) aufzunehmen und die relative Axialverschiebung zuzulassen, und wobei ein zweites Pufferglied (113) zwischen der Bewegungsblockbaugruppe (106) und dem zylinderförmigen Raum (114) im Innern des Gehäuses (100) montiert ist, um als Puffer zu dienen, während die Bewegungsblockbaugruppe (106) ihre Axialverschiebung ausführt; und
wobei die Magnetpoloberflächen des säulenförmigen Magneten (107) und des weiteren säulenförmigen Magneten (207) im Verhältnis zum ringförmigen Stromerzeugungsspulensatz (104) und die Magnetpoloberflächen des äußeren Magneten (117) und des weiteren äußeren Magneten (217) im Verhältnis zum ringförmigen Stromerzeugungsspulensatz (204) dieselbe Polarität aufweisen.

6. Ein Stromgenerator mit der kopplungssymmetrischen Schwingungs-Art, ausgestattet mit einem magnetischen Bewegungsblock, wobei der magnetische Bewegungsblock einen inneren säulenförmigen und einen äußeren ringförmigen Bereich aufweist, wie in Anspruch 5 aufgeführt; wobei die Magnetpoloberflächen des säulenförmigen Magneten (107) und des äußeren Magneten (117) im Verhältnis zum ringförmigen Stromerzeugungsspulensatz (104) und die Magnetpoloberflächen des weiteren säulenförmigen Magneten (207) und des weiteren äußeren Magneten (217) im Verhältnis zum weiteren ringförmigen Stromerzeugungsspulensatz (204) unterschiedliche Polaritäten aufweisen.

7. Ein Stromgenerator der kopplungssymmetrischen Schwingungs-Art, ausgestattet mit einem magnetischen Bewegungsblock, wobei der magnetische Bewegungsblock einen inneren säulenförmigen und einen äußeren ringförmigen Bereich wie in Anspruch 4 aufgeführt aufweist, wobei der säulenförmige Magnet (107), der säulenförmige Magnet (207), der ringförmige Stromerzeugungsspulensatz (104), der ringförmige Stromerzeugungsspulensatz (204), das äußere magnetische leitende Glied (108) und das äußere magnetische leitende Glied (208) jeweils aus zwei oder mehr als zwei Einheiten bestehen.

8. Ein Stromgenerator der kopplungssymmetrischen Schwingungs-Art, ausgestattet mit einem magnetischen Bewegungsblock, wobei der magnetische Bewegungsblock einen inneren säulenförmigen und einen äußeren ringförmigen Bereich aufweist, wie in Anspruch 5 aufgeführt, wobei der säulenförmige Magnet (107), der säulenförmige Magnet (207), der ringförmige Stromerzeugungsspulensatz (104), der ringförmige Stromerzeugungsspulensatz (204), der äußere Magnet (117) und der äußere Magnet (217) jeweils aus zwei oder mehr als zwei Einheiten bestehen.

9. Ein Stromgenerator der kopplungssymmetrischen Schwingungs-Art, ausgestattet mit einem magnetischen Bewegungsblock, wobei der magnetische Bewegungsblock einen inneren säulenförmigen und einen äußeren ringförmigen Bereich aufweist, wie in Anspruch 6 aufgeführt, wobei der säulenförmige Magnet (107), der säulenförmige Magnet (207), der ringförmige Stromerzeugungsspulensatz (104), der ringförmige Stromerzeugungsspulensatz (204), der äußere Magnet (117) und der äußere Magnet (217) aus zwei oder mehr Einheiten bestehen.

10. Ein Stromgenerator der kopplungssymmetrischen Schwingungs-Art, ausgestattet mit einem magnetischen Bewegungsblock, wobei der magnetische Bewegungsblock einen inneren säulenförmigen und einen äußeren ringförmigen Bereich aufweist, wie in Anspruch 4 aufgeführt, wobei der säulenförmige Magnet (107), der säulenförmige Magnet (207), das äußere magnetische leitende Glied (108) und das äußere magnetische leitende Glied (208) aus zwei Einheiten oder mehr als zwei Einheiten bestehen und der ringförmige Stromerzeugungsspulensatz (104) aus einer Einheit besteht.

11. Ein Stromgenerator der kopplungssymmetrischen Schwingungs-Art, ausgestattet mit einem magnetischen Bewegungsblock, wobei der magnetische Bewegungsblock einen inneren säulenförmigen und einen äußeren ringförmigen Bereich aufweist, wie in Anspruch 5 aufgeführt, wobei der säulenförmige Magnet (107), der säulenförmige Magnet (207), der äußere Magnet (117) und der äußere Magnet (217) aus zwei Einheiten oder mehr Einheiten bestehen; und wobei der ringförmige Stromerzeugungsspulensatz (104) aus einer Einheit besteht.

12. Ein Stromgenerator der kopplungssymmetrischen Schwingungs-Art, ausgestattet mit einem magnetischen Bewegungsblock, wobei der magnetische Bewegungsblock einen inneren säulenförmigen und einen äußeren ringförmigen Bereich aufweist, wie in Anspruch 6 aufgeführt, wobei der säulenförmige Magnet (107), der säulenförmige Magnet (207), der äußere Magnet (117) und der äußere Magnet (217) aus zwei Einheiten oder mehr als zwei Einheiten bestehen; und wobei der ringförmige Stromerzeugungsspulensatz (104) aus einer Einheit besteht.

## Revendications

1. Générateur d'énergie du type à vibrations réciproques équipé d'un moyen de mouvement magnétique, le moyen de mouvement magnétique ayant une partie en colonne intérieure et une partie annulaire extérieure, le générateur comprenant un aimant en colonne (107) ayant une forme de colonne ronde et ayant différents pôles magnétiques dans la direction axiale, et un élément conducteur magnétique extérieur (108) à l'extérieur de et entourant l'aimant en colonne (107), l'aimant en colonne (107) et l'élément conducteur magnétique extérieur (108) étant agencés pour former un ensemble moyen de mouvement (106) et étant agencés de façon concentrique l'un par rapport à l'autre pour former un trajet magnétique pour exécuter le déplacement axial synchrone, et le diamètre extérieur de l'aimant en colonne (107) est plus petit que le diamètre intérieur de l'élément conducteur magnétique extérieur (108) et formé avec un espace annulaire permettant à un ensemble bobine de génération d'énergie annulaire (104) de le traverser, de telle sorte que, lorsque le moyen de mouvement magnétique et l'ensemble bobine (104) exécutent axialement des vibrations de déplacement axial réciproques relatives, l'ensemble bobine de génération d'énergie annulaire (104) génère de l'énergie électrique selon la loi de Lenz, le générateur comprenant en outre :
un boîtier (100) : qui est constitué d'un matériau ayant une conduction magnétique médiocre et une conduction électrique médiocre, ayant une forme cylindrique creuse avec une extrémité intérieure s'étendant vers l'intérieur et formant un siège d'ensemble bobine annulaire tubulaire (101) avec son extrémité distale qui s'étend pour être reliée à l'ensemble bobine de génération d'énergie annulaire (104), un espace annulaire (103) étant formé entre le siège d'ensemble bobine annulaire tubulaire (101) et le trou intérieur du boîtier (100), et le centre du siège d'ensemble bobine annulaire tubulaire (101) est formé avec un espace rond (102), et l'ensemble bobine de génération d'énergie annulaire (104) étant installé avec un fil de sortie (105) pour délivrer en sortie l'énergie électrique générée par l'ensemble bobine de génération d'énergie annulaire (104) ;
un ensemble moyen de mouvement (106) qui est constitué d'un matériau ayant une conduction magnétique médiocre et une conduction électrique médiocre, comprenant une structure en forme de coupe pour combinaison avec l'élément conducteur magnétique extérieur (108), et une colonne centrale au centre de la structure en forme de coupe pour combinaison avec l'aimant en colonne (107), la périphérie de la colonne centrale du moyen de mouvement (109) et la structure en forme de coupe du moyen de mouvement (110) formant un espace annulaire intérieur (111) pour recevoir l'ensemble bobine de génération d'énergie annulaire (104) et le siège d'ensemble bobine annulaire tubulaire (101) et permettre au moyen de mouvement et à l'ensemble bobine d'exécuter un déplacement axial relatif, et l'espace rond (102) du siège d'ensemble bobine annulaire tubulaire (101) étant prévu pour recevoir l'aimant en colonne (107) et la colonne centrale du moyen de mouvement (109) et permettre au moyen de mouvement et à l'ensemble bobine d'exécuter un déplacement axial relatif ;
un premier élément tampon (112) installé entre l'espace rond (102) du siège d'ensemble bobine annulaire tubulaire (101) et la paroi intérieure du boîtier (100) pour servir de tampon lorsque la colonne centrale (109) et l'aimant en colonne (107) de l'ensemble moyen de mouvement (106) et l'élément conducteur magnétique extérieur (108) exécutent un déplacement axial ;
dans lequel, lors d'un mouvement réciproque axial du moyen de mouvement, l'aimant en colonne (107) et l'élément conducteur magnétique extérieur (108) passent à travers l'ensemble bobine de génération d'énergie annulaire (104), permettant à l'ensemble bobine de génération d'énergie annulaire (104) de générer de l'énergie ;
dans lequel un espace cylindrique (114) est ménagé à l'intérieur du boîtier (100) pour recevoir la périphérie extérieure de l'ensemble moyen de mouvement (106) et permettre le déplacement axial relatif, et un second élément tampon (113) étant installé entre l'ensemble moyen de mouvement (106) et l'espace cylindrique (114) à l'intérieur du boîtier (100) pour servir de tampon lorsque l'ensemble moyen de mouvement (106) exécute son déplacement axial.

2. Générateur d'énergie du type à vibrations réciproques équipé d'un moyen de mouvement magnétique, le moyen de mouvement magnétique ayant une partie en colonne intérieure et une partie annulaire extérieure selon la revendication 1, dans lequel l'intérieur de l'ensemble bobine de génération d'énergie annulaire (104) est couplé à l'aimant en colonne (107), et 1"extérieur de l'ensemble bobine de génération d'énergie annulaire (104) est couplé à un aimant extérieur (117) installé relativement avec la même polarité que l'aimant en colonne (107), l'aimant extérieur (117) remplaçant l'élément conducteur magnétique extérieur (108) de la revendication 1, le générateur comprenant en outre :
un boîtier (100) : qui est constitué d'un matériau ayant une conduction magnétique médiocre et une conduction électrique médiocre, ayant une forme cylindrique creuse avec une extrémité intérieure s'étendant vers l'intérieur et formant un siège d'ensemble bobine annulaire tubulaire (101) avec son extrémité distale s'étendant pour être reliée à l'ensemble bobine de génération d'énergie annulaire (104), un espace annulaire (103) étant formé entre le siège d'ensemble bobine annulaire tubulaire (101) et le trou intérieur du boîtier (100), et le centre du siège d'ensemble bobine annulaire tubulaire (101) est formé avec un espace rond (102), et l'ensemble bobine de génération d'énergie annulaire (104) étant installé avec un fil de sortie (105) pour délivrer en sortie l'énergie électrique générée par l'ensemble bobine de génération d'énergie annulaire (104) ;
un ensemble moyen de mouvement (106) qui est constitué d'un matériau ayant une conduction magnétique médiocre et une conduction électrique médiocre, comprenant une structure en forme de coupe pour combinaison avec l'aimant extérieur (117) et une colonne centrale au centre de la structure en forme de coupe pour combinaison avec l'aimant en colonne (107), la périphérie de la colonne centrale du moyen de mouvement (109) et la structure en forme de coupe du moyen de mouvement (110) formant un espace annulaire intérieur (111) pour recevoir l'ensemble bobine de génération d'énergie annulaire (104) et le siège d'ensemble bobine annulaire tubulaire (101) et permettre au moyen de mouvement et à l'ensemble bobine d'exécuter un déplacement axial relatif, et l'espace rond (102) du siège d'ensemble bobine annulaire tubulaire (101) étant prévu pour recevoir l'aimant en colonne (107) et la colonne centrale du moyen de mouvement (109) et permettre au moyen de mouvement et à l'ensemble bobine d'exécuter un déplacement axial relatif ;
un premier élément tampon (112) installé entre l'espace rond (102) du siège d'ensemble bobine annulaire tubulaire (101) et la paroi intérieure du boîtier (100) pour servir de tampon lorsque la colonne centrale (109) et l'aimant en colonne (107) du moyen de mouvement et l'aimant extérieur (117) exécutent un déplacement axial ;
dans lequel, lors d'un mouvement réciproque axial du moyen de mouvement, l'aimant en colonne (107) et l'aimant extérieur (117) passent à travers l'ensemble bobine de génération d'énergie annulaire (104), permettant à l'ensemble bobine de génération d'énergie annulaire (104) de générer de l'énergie ;
dans lequel un espace cylindrique (114) est ménagé à l'intérieur du boîtier (100) pour recevoir la périphérie extérieure de l'ensemble moyen de mouvement (106) et permettre le déplacement axial relatif, et un second élément tampon (113) étant installé entre l'ensemble moyen de mouvement (106) et l'espace cylindrique (114) à l'intérieur du boîtier (100) pour servir de tampon lorsque l'ensemble moyen de mouvement (106) exécute son déplacement axial ;
dans lequel les surfaces de pôle magnétique de l'aimant en colonne (107) et de l'aimant extérieur (117) par rapport à l'ensemble bobine de génération d'énergie annulaire (104) ont la même polarité.

3. Générateur d'énergie du type à vibrations réciproques équipé d'un moyen de mouvement magnétique, le moyen de mouvement magnétique ayant une partie en colonne intérieure et une partie extérieure selon la revendication 2, dans lequel les surfaces de pôle magnétique de l'aimant en colonne (107) et de l'aimant extérieur (117) par rapport à l'ensemble bobine de génération d'énergie annulaire (104) ont des polarités différentes.

4. Générateur d'énergie du type à vibrations réciproques équipé d'un moyen de mouvement magnétique, le moyen de mouvement magnétique ayant une partie en colonne intérieure et une partie annulaire extérieure selon la revendication 1, dans lequel le générateur comprend un ensemble bobine de génération d'énergie annulaire et un autre ensemble bobine de génération d'énergie annulaire (204) décalé axialement par rapport à l'ensemble bobine de génération d'énergie annulaire (104), l'intérieur des ensembles bobines de génération d'énergie annulaires (104), (204) étant couplé aux aimants en colonnes (107), (207), et leur extérieur étant couplé aux éléments conducteurs magnétiques extérieurs (108), (208), le générateur comprenant en outre :
un boîtier (100) qui est constitué d'un matériau ayant une conduction magnétique médiocre et une conduction électrique médiocre, ayant une forme cylindrique creuse avec une extrémité intérieure s'étendant vers l'intérieur et formant un siège d'ensemble bobine annulaire tubulaire (101) avec son extrémité distale s'étendant pour être reliée à l'ensemble bobine de génération d'énergie annulaire (104), et combinée à un siège de séparation d'ensemble bobine annulaire tubulaire supplémentaire (201) relié de façon étendue à l'ensemble bobine de génération d'énergie annulaire (204), un espace annulaire (103) étant formé entre le siège d'ensemble bobine annulaire tubulaire (101) et le trou intérieur du boîtier (100), et le centre du siège d'ensemble bobine annulaire tubulaire (101) est formé avec espace rond (102), et les ensembles bobines de génération d'énergie annulaires (104), (204) étant reliés en parallèle ou en série de telle sorte que la tension peut s'accumuler pendant la génération d'énergie, et les ensembles bobines de génération d'énergie annulaires (104), (204) étant chacun installés avec un fil de sortie (105) pour délivrer en sortie l'énergie électrique générée par les ensembles bobines de génération d'énergie annulaires (104), (204) ;
un ensemble moyen de mouvement (106) : qui est constitué d'un matériau ayant une conduction magnétique médiocre et une conduction électrique médiocre, comprenant une structure en forme de coupe pour combinaison avec l'élément conducteur magnétique extérieur (108) et un anneau de séparation de structure en forme de coupe (210) combiné de façon étendue à un élément conducteur magnétique extérieur supplémentaire (208), et une colonne centrale du moyen de mouvement (109) au centre de la structure en forme de coupe pour combinaison avec l'aimant en colonne (107) et une colonne centrale supplémentaire du moyen de mouvement (209) combinée de façon étendue à un aimant en colonne supplémentaire (207), la périphérie de la colonne centrale du moyen de mouvement (109) et la structure en forme de coupe du moyen de mouvement (110) formant un espace annulaire intérieur (111) pour recevoir les ensembles bobines de génération d'énergie annulaires (104), (204) et le siège de séparation d'ensemble bobine annulaire tubulaire supplémentaire (201) et le siège d'ensemble bobine annulaire tubulaire (101) et permettre d'exécuter un déplacement axial relatif, et le siège d'ensemble bobine annulaire tubulaire (101) et l'espace rond (102) du siège de séparation d'ensemble bobine annulaire tubulaire supplémentaire (201) étant prévus pour recevoir les aimants en colonne (107), (207) et la colonne centrale des moyens de mouvement (109), (209) et permettre aux moyens de mouvement et aux ensembles bobines d'exécuter un déplacement axial relatif ;
un premier élément tampon (112) installé entre l'espace rond (102) du siège d'ensemble bobine annulaire tubulaire (101) et la paroi intérieure du boîtier (100) pour servir de tampon lorsque les colonnes centrales (109), (209) et les aimants en colonnes (107), (207) du moyen de mouvement et les éléments conducteurs magnétiques extérieurs (108), (208) exécutent un déplacement axial ;
dans lequel l'intervalle de l'aimant en colonne (107) et de l'aimant en colonne supplémentaire (207), séparés par la colonne centrale supplémentaire du moyen de mouvement (209), et l'intervalle de l'ensemble bobine de génération d'énergie annulaire (104) et de l'ensemble bobine de génération d'énergie annulaire supplémentaire (204), séparés par le siège de séparation d'ensemble bobine annulaire tubulaire (201), permettent à l'ensemble bobine de génération d'énergie annulaire (104) et à l'ensemble bobine de génération d'énergie annulaire supplémentaire (204) de générer une tension ayant la même phase ; lors d'un mouvement réciproque axial du moyen de mouvement, l'aimant en colonne (107) et l'aimant en colonne (207) et l'élément conducteur magnétique extérieur (108) et l'élément conducteur magnétique extérieur (208) passent à travers l'ensemble bobine de génération d'énergie annulaire (104) et l'ensemble bobine de génération d'énergie annulaire supplémentaire (204) pour générer de l'énergie ;
dans lequel un espace cylindrique (114) est ménagé à l'intérieur du boîtier pour recevoir la périphérie extérieure de l'ensemble moyen de mouvement (106) et permettre le déplacement axial relatif, et un second élément tampon (113) étant installé entre l'ensemble moyen de mouvement (106) et l'espace cylindrique (114) à l'intérieur du boîtier (100) pour servir de tampon lorsque l'ensemble moyen de mouvement (106) exécute son déplacement axial.

5. Générateur d'énergie du type à vibrations réciproques équipé d'un moyen de mouvement magnétique ayant une partie en colonne intérieure et une partie annulaire extérieure selon la revendication 2, dans lequel le générateur comprend un ensemble bobine de génération d'énergie annulaire (104) et un ensemble bobine de génération d'énergie annulaire supplémentaire (204) décalé axialement par rapport à l'ensemble bobine de génération d'énergie annulaire (104), l'intérieur des ensembles bobines de génération d'énergie annulaires (104), (204) étant couplé aux aimants en colonnes (107, 207), et l'extérieur des ensembles bobines de génération d'énergie annulaires (104, 204) étant couplé aux aimants extérieurs (117, 217) agencés relativement avec la même polarité que l'aimant en colonne (107), le générateur comprenant en outre :
un boîtier (100) : qui est constitué d'un matériau ayant une conduction magnétique médiocre et une conduction électrique médiocre, ayant une forme cylindrique creuse avec une extrémité intérieure s'étendant vers l'intérieur et formant un siège d'ensemble bobine annulaire tubulaire (101) avec son extrémité distale s'étendant pour être reliée à l'ensemble bobine de génération d'énergie annulaire (104), et combinée à un siège de séparation d'ensemble bobine annulaire tubulaire supplémentaire (201) relié de façon étendue à l'ensemble bobine de génération d'énergie annulaire supplémentaire (204), un espace annulaire (103) étant formé entre le siège d'ensemble bobine annulaire tubulaire (101) et le trou intérieur du boîtier (100), et le centre du siège d'ensemble bobine annulaire tubulaire (101) est formé avec un espace rond (102), et les ensembles bobines de génération d'énergie annulaires (104, 204) étant reliés en parallèle ou en série de telle sorte que la tension peut s'accumuler pendant la génération d'énergie, et les ensembles bobines de génération d'énergie annulaires (104, 204) sont chacun installés avec un fil de sortie (105) pour délivrer en sortie l'énergie électrique générée par les ensembles bobines de génération d'énergie annulaires (104, 204) ;
un ensemble moyen de mouvement (206) qui est constitué d'un matériau ayant une conduction magnétique médiocre et une conduction électrique médiocre, comprenant une structure en forme de coupe pour combinaison avec l'aimant extérieur (117), et un anneau de séparation de structure en forme de coupe (210) combiné de façon étendue à l'aimant extérieur supplémentaire (217), et une colonne centrale (109) au centre de la structure en forme de coupe pour combinaison avec l'aimant en colonne (107) et une colonne centrale supplémentaire du moyen de mouvement (209) combinée de façon étendue à un aimant en colonne supplémentaire (207), la périphérie de la colonne centrale du moyen de mouvement (109) et la structure en forme de coupe du moyen de mouvement (110) formant un espace annulaire intérieur (111) pour recevoir les ensembles bobines de génération d'énergie annulaires (104), (204) et le siège de séparation d'ensemble bobine annulaire tubulaire supplémentaire (201) et le siège d'ensemble bobine annulaire tubulaire (101) et permettre d'exécuter un déplacement axial relatif, et le siège d'ensemble bobine annulaire tubulaire (101) et l'espace rond (102) du siège de séparation d'ensemble bobine annulaire tubulaire supplémentaire (201) étant prévus pour recevoir les aimants en colonne (107, 207) et la colonne centrale des moyens de mouvement (109), (209) et permettre aux moyens de mouvement et aux ensembles bobines d'exécuter un déplacement axial relatif ;
un premier élément tampon (112) installé entre l'espace rond (102) du siège d'ensemble bobine annulaire tubulaire (101) et la paroi intérieure du boîtier (100) pour servir de tampon lorsque les colonnes centrales (109), (209) et les aimants en colonnes (107), (207) du moyen de mouvement et les aimants extérieurs (117), (217) exécutent un déplacement axial ;
dans lequel l'intervalle de l'aimant en colonne (107) et de l'aimant en colonne supplémentaire (207) et de l'aimant extérieur (117) et de l'aimant extérieur supplémentaire (217), séparés par la colonne centrale supplémentaire du moyen de mouvement (209), et l'intervalle de l'ensemble bobine de génération d'énergie annulaire (104) et de l'ensemble bobine de génération d'énergie annulaire (204), séparés par le siège de séparation d'ensemble bobine annulaire tubulaire (201), permettent à l'ensemble bobine de génération d'énergie annulaire (104) et à l'ensemble bobine de génération d'énergie annulaire supplémentaire (204) de générer la tension ayant la même phase ; lors d'un mouvement réciproque axial du moyen de mouvement, l'aimant en colonne (107) et l'aimant en colonne supplémentaire (207) et l'aimant extérieur (117) et l'aimant extérieur supplémentaire (217) passant à travers l'ensemble bobine de génération d'énergie annulaire (104) et l'ensemble bobine de génération d'énergie annulaire supplémentaire (204) pour générer de l'énergie ;
dans lequel un espace cylindrique (114) est ménagé à l'intérieur du boîtier pour recevoir la périphérie extérieure de l'ensemble moyen de mouvement (106) et permettre le déplacement axial relatif, et un second élément tampon (113) étant installé entre l'ensemble moyen de mouvement (106) et l'espace cylindrique (114) à l'intérieur du boîtier (100) pour servir de tampon lorsque l'ensemble moyen de mouvement (106) exécute son déplacement axial ; et
dans lequel les surfaces de pôle magnétique de l'aimant en colonne (107) et de l'aimant en colonne supplémentaire (207) par rapport à l'ensemble bobine de génération d'énergie annulaire (104) et les surfaces de pôle magnétique de l'aimant extérieur (117) et de l'aimant extérieur supplémentaire (217) par rapport à l'ensemble bobine de génération d'énergie annulaire (204) ont la même polarité.

6. Générateur d'énergie du type à vibrations réciproques équipé d'un moyen de mouvement magnétique, le moyen de mouvement magnétique ayant une partie en colonne intérieure et une partie de moyen de mouvement magnétique annulaire extérieure selon la revendication 5, dans lequel les surfaces de pôle magnétique de l'aimant en colonne (107) et de l'aimant extérieur (117) par rapport à l'ensemble bobine de génération d'énergie annulaire (104) et les surfaces de pôle magnétique de l'aimant en colonne supplémentaire (207) et de l'aimant extérieur supplémentaire (217) par rapport à l'ensemble bobine de génération d'énergie annulaire supplémentaire (204) ont des polarités différentes.

7. Générateur d'énergie du type à vibrations réciproques équipé d'un moyen de mouvement magnétique, le moyen de mouvement magnétique ayant une partie en colonne intérieure et une partie annulaire extérieure selon la revendication 4, dans lequel l'aimant en colonne (107), l'aimant en colonne (207), l'ensemble bobine de génération d'énergie annulaire (104), l'ensemble bobine de génération d'énergie annulaire (204), l'élément conducteur magnétique extérieur (108) et l'élément conducteur magnétique extérieur (208) sont tous composés de deux unités ou de plus de deux unités.

8. Générateur d'énergie du type à vibrations réciproques équipé d'un moyen de mouvement magnétique, le moyen de mouvement magnétique ayant une partie en colonne intérieure et une partie annulaire extérieure selon la revendication 5, dans lequel l'aimant en colonne (107), l'aimant en colonne (207), l'ensemble bobine de génération d'énergie annulaire (104), l'ensemble bobine de génération d'énergie annulaire (204), l'aimant extérieur (117) et l'aimant extérieur (217) sont tous composés de deux unités ou de plus de deux unités.

9. Générateur d'énergie du type à vibrations réciproques équipé d'un moyen de mouvement magnétique, le moyen de mouvement magnétique ayant une partie en colonne intérieure et une partie annulaire extérieure selon la revendication 6, dans lequel l'aimant en colonne (107), l'aimant en colonne (207), l'ensemble bobine de génération d'énergie annulaire (104), l'ensemble bobine de génération d'énergie annulaire (204), l'aimant extérieur (117) et l'aimant extérieur (217) sont tous composés de deux unités ou de plus de deux unités.

10. Générateur d'énergie du type à vibrations réciproques équipé d'un moyen de mouvement magnétique, le moyen de mouvement magnétique ayant une partie en colonne intérieure et une partie annulaire extérieure selon la revendication 4, dans lequel l'aimant en colonne (107), l'aimant en colonne (207), l'élément conducteur magnétique extérieur (108) et l'élément conducteur magnétique extérieur (208) sont tous composés de deux unités ou de plus de deux unités, et l'ensemble bobine de génération d'énergie annulaire (104) est composé d'une seule unité.

11. Générateur d'énergie du type à vibrations réciproques équipé d'un moyen de mouvement magnétique, le moyen de mouvement magnétique ayant une partie en colonne intérieure et une partie annulaire extérieure selon la revendication 5, dans lequel l'aimant en colonne (107), l'aimant en colonne (207), l'aimant extérieur (117) et l'aimant extérieur (217) sont tous composés de deux unités ou de plus de deux unités, et l'ensemble bobine de génération d'énergie annulaire (104) est composé d'une seule unité.

12. Générateur d'énergie du type à vibrations réciproques équipé d'un moyen de mouvement magnétique, le moyen de mouvement magnétique ayant une partie en colonne intérieure et un moyen de mouvement magnétique annulaire extérieur selon la revendication 6, dans lequel l'aimant en colonne (107), l'aimant en colonne (207), l'aimant extérieur (117) et l'aimant extérieur (217) sont tous composés de deux unités ou de plus de deux unités, et l'ensemble bobine de génération d'énergie annulaire (104) est composé d'une seule unité.
